# EUROPÄISCHE PATENTSCHRIFT

(11) **EP 1 452 469 B1**
(45) Veröffentlichungstag und Bekanntmachung des Hinweises auf die Patenterteilung: **07.05.2008**
(21) Anmeldenummer: 04003998.4
(22) Anmeldetag: 23.02.2004
(51) Int. Cl.: B65G 47/90, B65G 61/00

(54) **Palettierroboter**
Palletizer
Palettiseur

(30) Priorität: 28.02.2003 DE 10309131
(43) Veröffentlichungstag der Anmeldung: 01.09.2004
(73) Patentinhaber: Windmöller & Hölscher KG, 49525 Lengerich (DE)
(72) Erfinder: Kienel, Andreas, 49090 Osnabrück (DE); Hawighorst, Thomas, 49078 Osnabrück (DE); Schrödter, Andreas, 49549 Ladbergen (DE)

(56) Entgegenhaltungen:
- EP-A- 0 578 346
- DE-A- 4 203 118

## Beschreibung

Die Erfindung betrifft einen Palettierroboter nach dem Oberbegriff des Anspruchs 1.

Derartige Palettierroboter werden in der Verpackungsindustrie eingesetzt um Säcke oder Sackstapel zu greifen und auf einer Palette anzuordnen. Die Greifarme dieser Roboter verfügen in der Regel über zwei Arme welche zangenartig zusammenwirken. Da die Kräfte zur Bewegung der Arme groß sind, ist jedem der Arme ein Aktuator - oft ein Pneumatikzylinder - zugeordnet.

Ein solcher Palettierroboter ist aus DE 4 203 118 A1 bekannt.

Diese Aktuatoren werden von Steuereinheiten zu gleichen Zeitpunkten angesteuert. Trotz dieser Tatsache kann es im Betrieb des Palettierroboters - beispielsweise infolge schlecht gesteuerter Greifvorgänge, bei denen die Arme unterschiedlich mit Kraft beaufschlagt werden - dazu kommen, dass die Öffnungs- und Schließbewegungen der Arme zu unterschiedlichen Zeitpunkten beginnen oder eine unterschiedliche Länge aufweisen.

Diese asymmetrischen Armbewegungen können dazu führen, dass die Säcke nicht mehr zuverlässig von den Greifarmen gegriffen, an den gewünschten Ort transportiert werden und dort exakt positioniert werden können. So kann es beispielsweise vorkommen, dass beim Öffnen einer der Arme zu früh öffnet und der andere Arm beziehungsweise der ihm zugeordnete Anschlag aufgrund der nun fehlenden Gegenkraft entgegen der Öffnungsrichtung nachfedert und den Sackstapel in Seitwärtsrichtung beschleunigt, so dass dieser falsch auf der Palette abgelegt wird.

Daher besteht die Aufgabe der vorliegenden Erfindung darin, das Entstehen asymmetrischer Armbewegungen zu verhindern.

Erfindungsgemäß wird diese Aufgabe durch die Merkmale des kennzeichnenden Teils des Anspruchs 1 gelöst.

Es ist besonders vorteilhaft, wenn das Verbindungselement ein Riemen ist. Riemen können beispielsweise biegsam sein. Daher ist es besonders vorteilhaft zwei Rollen vorzusehen, um die der Riemen umgelenkt wird.

Wenn der Riemen orthogonal zur Bewegungsrichtung der Greifarme verläuft, können auch Formatverstellungen problemloser vorgenommen werden. Dies hat folgenden Grund.

Verstellvorrichtungen, mit welchen das Format der zu greifenden Säcke einstellbar ist, ändern den Abstand der Achsen, um welche die Schwenkbewegung der Greiferarme verläuft. Naturgemäß verlaufen diese Achsen orthogonal zur Schwenkrichtung. Wenn der Riemen parallel zur Einstellrichtung verläuft, müssen an dem Riemen keine Einstellungen beim Formatwechsel vorgenommen werden.

Weitere Ausführungsbeispiele der Erfindung gehen aus der gegenständlichen Beschreibung und den Ansprüchen hervor.

Die einzelnen Figuren zeigen:
- Fig. 1: Seitenansicht der Greifereinheit eines Palettierroboters in der Seitensicht mit geschlossenen Greifern für ein schmales Sackformat
- Fig. 2: wie Fig. 1, jedoch mit geöffneten Zangen.
- Fig. 3: Draufsicht auf die Greifereinheit aus Fig. 2
- Fig. 4: Seitenansicht der Greifereinheit aus Fig. 1, jedoch für große Sackformate
- Fig. 5: Draufsicht auf die Greifereinheit wie in Fig. 3., jedoch für große Sackformate

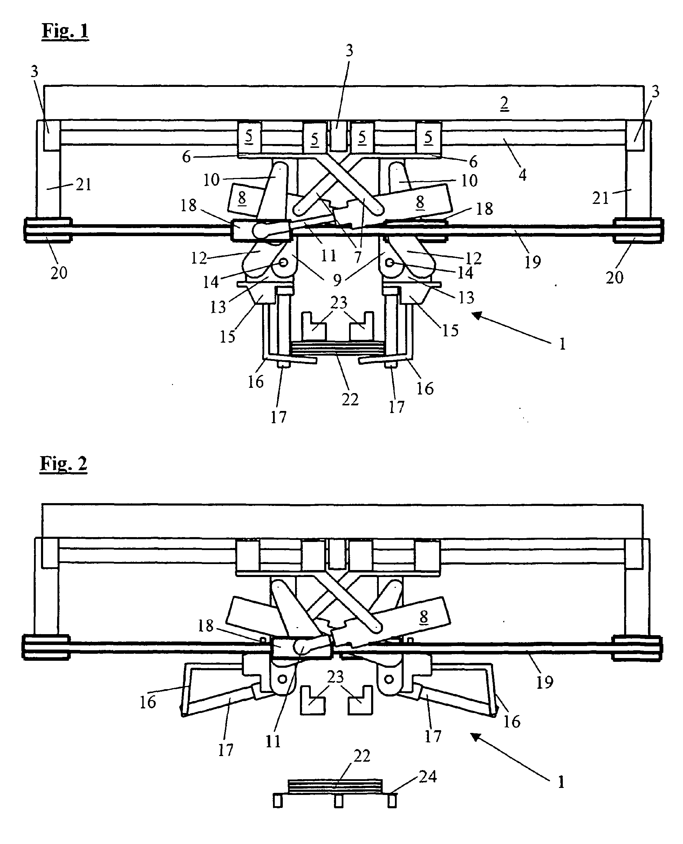

Fig. 1 zeigt eine Greifereinheit 1 eines erfindungsgemäßen Palettierroboters. Die Greifereinheit 1 ist über ein Tragegestell 2 drehbar und verschiebbar im nicht dargestellten Maschinengestell aufgehängt. Über die Halter 3 sind Führungsschienen 4 an dem Tragegestell 2 befestigt. Auf den Führungsschienen 4 sind Führungshülsen 5 verschieblich gelagert. An je 2 Führungshülsen 5 ist eine Tragplatte 6 befestigt. An jeder Tragplatte 6 ist ein Träger 7 befestigt, an welchem eine Kolbenzylindereinheit 8 drehbar gelagert ist. An jeder Tragplatte 6 ist zudem ein Tragblech 9 befestigt, an welchen jeweils ein Hebel 10 drehbar gelagert ist. Am Hebel 10 ist wiederum der Kolben 11 der Kolbenzylindereinheit 8 drehbar befestigt. Durch die Betätigung der Kolbenzylindereinheit 8 wird also der Hebel 10 um seinen Lagerpunkt gedreht. Am Hebel 10 ist auf nicht sichtbare Weise ein weiterer Hebel 12 drehbar befestigt, an dem seinerseits ein Greiferhalter 13 drehbar gelagert ist. Die auf den Hebel 10 wirkende Kraft wird also über den Hebel 12 auf den Greiferhalter 13 übertragen, der um das Lager 14, mit dem der Greiferhalter 13 im Tragblech 9 drehbar gelagert ist, schwenkt. Die eigentlichen Greifer 16 sind über Greiferbefestigungen 15 am Greiferhalter 13 angebracht. An den Hebeln 10 sind zusätzlich Anschläge 17 am Lager 14 drehbar gelagert. Die Anschläge 17 stützen sich zudem federnd am Greiferhalter 13 ab.

Am Hebel 10 sind Klemmstücke 18 befestigt, die auf einen Riemen 19 aufgeklemmt sind. Der Riemen 19, der ein Endlosriemen sein oder aus zwei endlichen Riemenabschnitten bestehen kann, wird über Rollen 20 umgelenkt. Die Rollen 20 sind über Rollenhalter 21 mit dem Tragegestell 2 verbunden.

Ein Sackstapel 22 wird während der Bewegung der Greifereinheit 1 zuverlässig gehalten, indem Andrückschienen 23 diesen an die Greifer 16 andrücken. Zu diesem Zweck werden die Andrückschienen 23 durch nicht gezeigte Stempel, die an den Tragplatten 6 befestigt sind, aufwärts und abwärts bewegt.

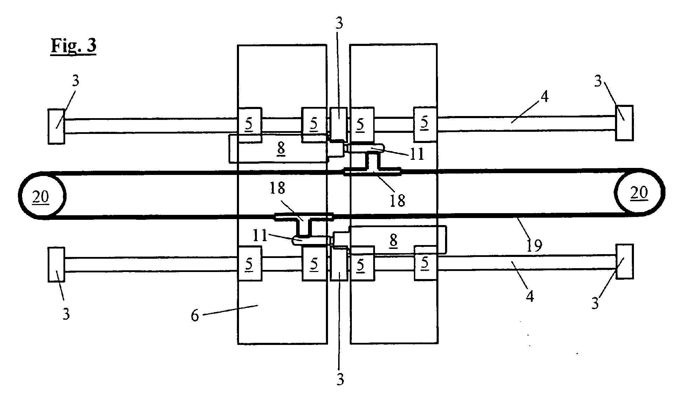

Soll nun der Sackstapel 22 auf eine Palette 24 abgeworfen werden, werden zunächst die Andrückschienen 23 aufwärts bewegt. Sodann werden die Kolben 11 der Kolbenzylindereinheiten 8 eingefahren, so dass sich die Greifer 16 nach außen bewegen beziehungsweise öffnen und den Sackstapel 22 freigeben, welcher dann auf die Palette 24 fällt. Die Fig. 2 zeigt die Greifereinheit 1 mit geöffneten Greifern 16. Da beide Kolben 11, wie aus der Fig. 3 ersichtlich, über die Klemmplatten 18 und den Riemen 19 verbunden sind, öffnen sich beide Greifer 16 immer gleichzeitig, auch wenn beispielsweise eine der Kolbenzylindereinheiten 8 fälschlicherweise nicht oder zu spät die zum Öffnen des Greifers 16 notwendige Kraft bereitstellt. Die Stapelqualität mehrerer Sackstapel 22 auf der Palette 24 bleibt folglich auch bei derartigen Fehlfunktionen erhalten. In diesem Zusammenhang ist es wichtig zu erwähnen, dass der Riemen 19 mit einer weitaus größeren Kraft belastbar ist, als eine Kolbenzylindereinheit 8 erzeugen kann.

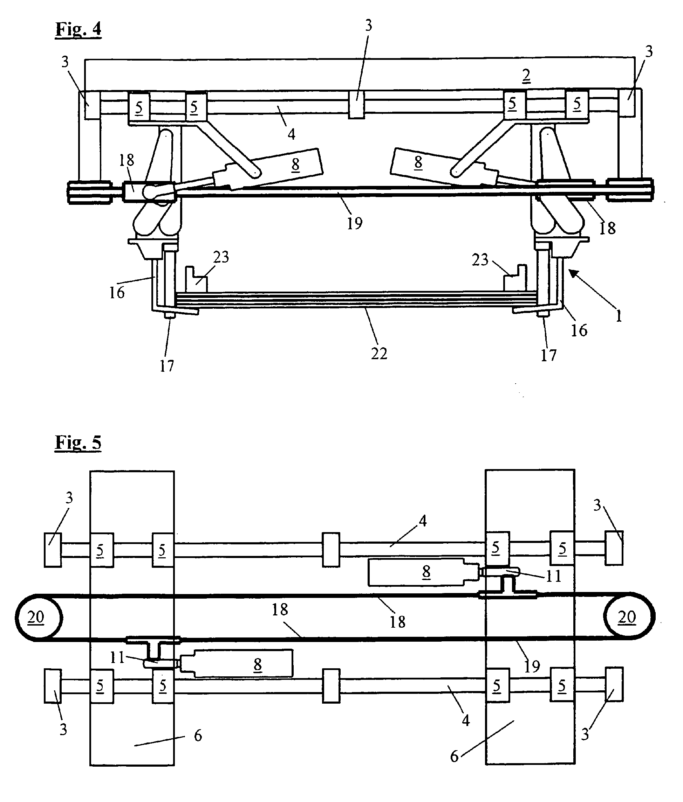

Die Fig. 4 zeigt die gleiche Greifereinheit 1, die auf Sackstapel 22 mit Säcken größeren Formates eingestellt ist. Zu diesem Zweck können die Führungshülsen 5 auf den Führungsschienen 4 verschoben werden. Diese Verschiebung kann über einen nicht dargestellten Spindelantrieb erfolgen. In der dem jeweiligen Sackformat entsprechenden Position der Führungshülsen 5 sind diese über die Reibungskraft des Spindelantrieb festgelegt,' können aber auch auf den Führungsschienen 4 festgeklemmt sein. Aus der Fig. 5 wird ersichtlich, dass auch bei einem Formatwechsel die Klemmstücke 18 nicht von dem Riemen 19 gelöst werden müssen, da sich die Trumen des Riemens 19 gegenläufig bewegen.

| **Bezugszeichenliste** | |
|---|---|
| 1 | Greifereinheit |
| 2 | Tragegestell |
| 3 | Halter |
| 4 | Führungsschiene |
| 5 | Führungshülsen |
| 6 | Tragplatten |
| 7 | Träger |
| 8 | Kolbenzylindereinheit |
| 9 | Tragblech |
| 10 | Hebel |
| 11 | Kolben |
| 12 | Hebel |
| 13 | Greiferhalter |
| 14 | Lager |
| 15 | Greiferbefestigung |
| 16 | Greifer |
| 17 | Gitter |
| 18 | Klemmstücke |
| 19 | Riemen |
| 20 | Rollen |
| 21 | Rollenhalter |
| 22 | Sackstapel |
| 23 | Andrückschienen |
| 24 | Palette |

## Patentansprüche

1. Palettierroboter zum Greifen und anschließendem Anordnen von Säcken oder Sackstapel, auf einer Ablage (24), welcher über zumindest zwei Greifarme (16) verfügt, die bei dem Greifen der Säcke oder Sackstapel (22) zangenartig zusammenwirken und welchen jeweils ein Aktuator (8), welcher die Kraft für die Greifbewegung bereitstellt, zugeordnet ist,
**gekennzeichnet durch**
zumindest ein mechanisches Verbindungselement (18, 19, 20), welches die Öffnungs- und Schließbewegungen der zumindest zwei Greifarme (16) koppelt.

2. Palettierroboter nach Anspruch 1
**dadurch gekennzeichnet, dass**
das mechanische Verbindungselement ein Riemen (19) ist.

3. Palettierroboter nach Anspruch 2
**dadurch gekennzeichnet, dass**
zwei Rollen (20) vorgesehen sind, um welche der Riemen (19) geführt wird.

4. Palettierroboter nach einem der beiden vorstehenden Ansprüche,
**dadurch gekennzeichnet dass**
die Richtung, in der der Riemen (19) bewegbar ist orthogonal zur Bewegungsrichtung der Greiferarme (16) verläuft.

5. Verfahren zum Greifen und anschließendem Anordnen von Säcken oder Sackstapel (22) auf einer Ablage (24), wobei zumindest zwei Greifarme (16) bei dem Greifen der Säcke oder Sackstapel (22) zangenartig zusammenwirken, welchen jeweils ein Aktuator (8), welcher die Kraft für die Greifbewegung bereitstellt, zugeordnet ist,
**dadurch gekennzeichnet, dass**
zumindest ein mechanisches Verbindungselement (18, 19, 20) die Öffnungs- und Schließbewegungen der zumindest zwei Greifarme (16) koppelt.

## Claims

1. Palletizing robot for the gripping and afterwards arranging of sacs or piles of sacs on a stacker (24) which comprises at least two clamping arms (16) which work forcipative together when gripping the sacs or piles of sacs and where to each of them an actuator (8) is allocated which provides the force for the gripping movement,
**characterized by**
at least a mechanical connecting element (18, 19, 20) which couples the opening and closing movements of the at least two clamping arms (16).

2. Palletizing robot according to claim 1
**characterized in that**
the mechanical fastener is a belt (19).

3. Palletizing robot according to claim 2
**characterized in that**
two rollers (20) are provided around which the belt (19) is guided.

4. Palletizing robot according to one of the two preceding claims,
**characterized in that**
the direction to which the belt (19) is movable is directed orthogonally to the movement direction of the clamping arms.

5. Process for the gripping and afterwards arranging of sacs or piles of sacs (22) on a stacker (24) whereby at least two clamping arms (16) work forcipative together when gripping the sacs or piles of sacs (22) and to which each an actuator (8) is assigned which provides the force for the gripping movement,
**characterized by**
at least one mechanical connecting element (18, 19, 20) which couples the opening and closing movements of the at least two clamping arms (16).

## Revendications

1. Robot palettiseur pour saisir et disposer ensuite des sacs ou piles de sacs sur un support (24) qui dispose d'au moins deux bras de préhension (16) qui, lors de la saisie des sacs ou piles de sacs (22) coopèrent à la manière d'une pince et auxquels est associé respectivement un actionneur (8) qui met à disposition la force pour le mouvement de préhension,
**caractérisé par** au moins un élément de liaison mécanique (18, 19, 20) qui couple les mouvements d'ouverture et de fermeture des au moins deux bras de préhension (16).

2. Robot palettiseur selon la revendication 1, **caractérisé en ce que** l'élément de liaison mécanique est une courroie (19).

3. Robot palettiseur selon la revendication 2, **caractérisé en ce que** deux rouleaux (20) sont prévus autour desquels est guidée la courroie (19).

4. Robot palettiseur selon l'une des deux revendications précédentes, **caractérisé en ce que** la direction dans laquelle est déplaçable la courroie (19), s'étend orthogonalement à la direction de déplacement des bras de préhension (16).

5. Procédé pour saisir et disposer ensuite des sacs ou piles de sacs (22) sur un support (24), où au moins deux bras de préhension (16) coopèrent lors de la saisie des sacs ou piles de sacs (22) à la manière d'une pince, auxquels est associé respectivement un actionneur (8), qui met à disposition la force pour le mouvement de préhension, **caractérisé en ce qu'**au moins un élément de liaison mécanique (18, 19, 20) couple les mouvements d'ouverture et fermeture des au moins deux bras de préhension (16).
